# EUROPEAN PATENT APPLICATION

(11) **EP 4 672 572 A1**
(43) Date of publication of application: **31.12.2025**
(21) Application number: 23923214.3
(22) Date of filing: 22.02.2023
(51) Int. Cl.: H02K 11/30

(54) **MOTOR DEVICE**

(71) Applicant: JTEKT Corporation, Kariya-shi, Aichi 448-8652 (JP)
(72) Inventor: SATO, Yuto, Kariya-shi, Aichi 448-8652 (JP)
(74) Representative: Winter, Brandl - Partnerschaft mbB
(86) International application number: PCT/JP2023/006487
(87) International publication number: WO 2024/176393

(57) **Abstract**

A motor device (31) includes: a motor (40); a first circuit board (51) provided at an axial end of the motor (40); a second circuit board (52) that is disposed at a position farther from the motor (40) than the first circuit board (51) in an axial direction of the motor (40) and that faces the first circuit board (51); an inter-board connector (62A, 62B, 85A, 85B) that connects the first circuit board (51) and the second circuit board (52); and a plurality of terminals (53E, 53F, 53G) configured to supply electric power or a signal to the first circuit board (51) and the second circuit board (52). The plurality of terminals (53E, 53F, 53G) is connected to the second circuit board alone.

## Description

### TECHNICAL FIELD

The present disclosure relates to motor devices.

### BACKGROUND ART

Conventionally, there are motor devices in which a motor and a control device are integrally provided. For example, the control device for a motor device in Patent Document 1 is provided at an end of a motor. The control device includes a power board and a control board. The power board includes an inverter circuit that supplies electric power to coils of the motor. The control board includes a control circuit that controls the operation of the inverter circuit. The power board and the control board are arranged at an interval in the axial direction of the motor.

The power board and the control board each include a power terminal and a ground terminal. A power supply voltage is supplied to each of the power board and the control board via a power terminal and a ground terminal.

### Related Art Documents

### Patent Documents

Patent Document 1: Japanese Unexamined Patent Application Publication No. 2019-68542 (JP 2019-68542 A)

### SUMMARY OF THE INVENTION

### Problem to be Solved by the Invention

The motor device of Patent Document 1 requires a process of connecting a power terminal and a ground terminal to both the power board and the control board by soldering.

### Means for Solving the Problem

A motor device according to one aspect of the present disclosure includes: a motor; a first circuit board provided at an axial end of the motor; a second circuit board that is disposed at a position farther from the motor than the first circuit board in an axial direction of the motor and that faces the first circuit board; an inter-board connector that connects the first circuit board and the second circuit board; and a plurality of terminals configured to supply electric power or a signal to the first circuit board and the second circuit board. The plurality of terminals is connected to the second circuit board alone.

### BRIEF DESCRIPTION OF THE DRAWINGS

[FIG. 1] FIG. 1 is a configuration diagram of a steering operation mechanism according to an embodiment of a motor device.
[FIG. 2] FIG. 2 is an exploded perspective view of the motor device in FIG. 1.
[FIG. 3] FIG. 3 is a top view showing a first surface of a control board in FIG. 2.
[FIG. 4] FIG. 4 is a bottom view showing a second surface of the control board in FIG. 2.
[FIG. 5] FIG. 5 is a top view showing a first surface of a power board in FIG. 2.
[FIG. 6] FIG. 6 is a bottom view showing a second surface of the power board in FIG. 2.
[FIG. 7] FIG. 7 is a sectional view showing a main part of the motor device in FIG. 1.

### MODES FOR CARRYING OUT THE INVENTION

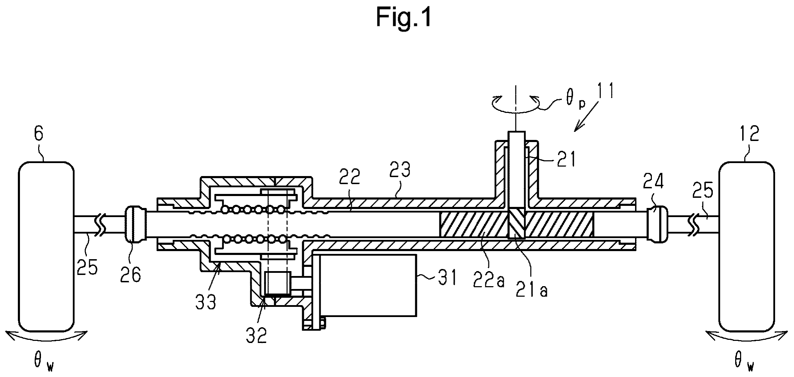

A motor device according to an embodiment will be described. The motor device is mounted on, for example, a steering system of a vehicle. As shown in FIG. 1, the steering system of the vehicle includes a steering operation mechanism 11. The steering operation mechanism 11 is a mechanism part that steers steered wheels 12 of the vehicle according to steering of a steering wheel.

The steering operation mechanism 11 includes a pinion shaft 21, a steered shaft 22, and a housing 23. The housing 23 rotatably supports the pinion shaft 21. The housing 23 also houses the steered shaft 22 such that the steered shaft 22 can reciprocate in an axial direction. The pinion shaft 21 is provided so as to intersect the steered shaft 22. Pinion teeth 21a of the pinion shaft 21 mesh with rack teeth 22a of the steered shaft 22. Both ends of the steered shaft 22 are connected to the steered wheels 12 via rack ends 24 and tie rods 25.

The steering system is a steer-by-wire steering system or an electric power steering system. When the steering system is a steer-by-wire steering system, the pinion shaft 21 is not mechanically connected to the steering wheel. When the steering system is an electric power steering system, the pinion shaft 21 is mechanically connected to the steering wheel via a steering shaft.

The steering operation mechanism 11 includes a motor device 31, a transmission mechanism 32, and a conversion mechanism 33. The motor device 31 is a source of a steering force to be applied to the steered shaft 22. The steering force is a force for steering the steered wheels 12. The transmission mechanism 32 is, for example, a belt transmission mechanism. The transmission mechanism 32 transmits rotation of the motor 31 to the conversion mechanism 33. The conversion mechanism 33 is, for example, a ball screw mechanism. The conversion mechanism 33 converts the rotation transmitted via the transmission mechanism 32 to axial motion of the steered shaft 22. The steered angle θ_{w} of the steered wheels 12 is changed as the steered shaft 22 moves in the axial direction. The steered shaft 22 is a shaft to be driven by the motor device 31.

When the steering system is a steer-by-wire steering system, the motor device 31 functions as a steering motor. The steering motor generates a steering force that is a force for steering the steered wheels 12. When the steering system is an electric power steering system, the motor device 31 functions as an assist motor. The assist motor generates an assist force that is a force for assisting in operating the steering wheel.

### <Configuration of Motor Device 31>

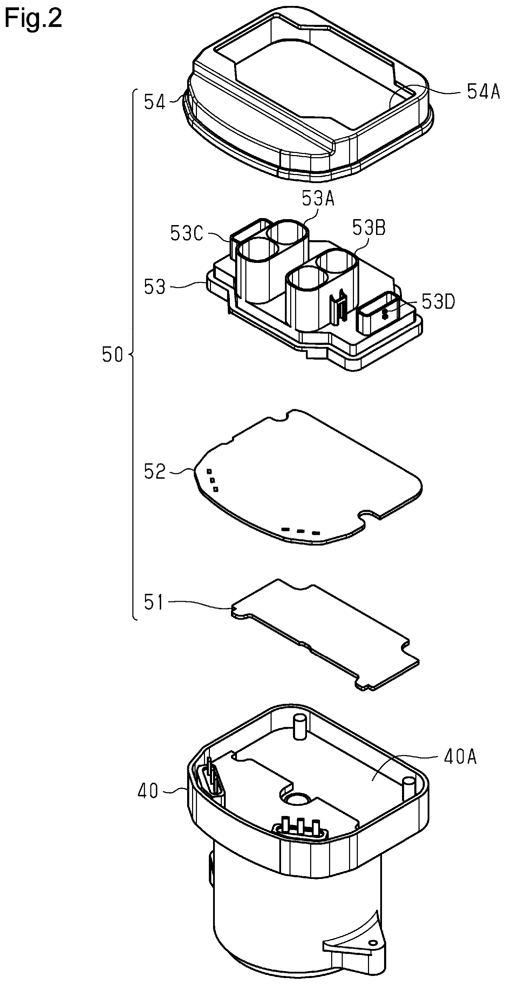

Next, the configuration of the motor device 31 will be described. As shown in FIG. 2, the motor device 31 includes a motor 40 and a control device 50. The motor 40 is, for example, a three-phase brushless motor. The motor 40 includes, for example, two winding groups. The control device 50 is attached to an axial end of the motor 40. The control device 50 independently controls power supply to the two winding groups.

The control device 50 includes a control board 51, a power board 52, a connector assembly 53, and a cover 53. The control board 51 includes electronic components for controlling power supply to the motor 40. The power board 52 includes electronic components for supplying electric power to the motor 40 through control by the control board 51. The axial end of the motor 40 includes a board housing portion 40A. The control board 51 is housed inside the board housing portion 40A. The power board 52 is attached to the axial end of the motor 40 so as to cover the control board 51. The power board 52 is disposed at a position farther from the motor 40 than the control board 51 in the axial direction of the motor 40.

The connector assembly 53 is made of synthetic resin. The connector assembly 53 includes a first power connector 53A and a second power connector 53B. The first power connector 53A extends in the opposite direction from the motor 40 and is open in the opposite direction from the motor 40. The first power connector 53A includes a power terminal and a ground terminal. A power plug that is a mating component is mated with the first power connector 53A. The power plug is provided at a first end of a power line. A second end of the power line is connected to a direct current power supply such as an in-vehicle battery. Electric power from the direct current power supply is supplied to the control board 51 and the power board 52 via the power terminal and the ground terminal. The second power connector 53B has the same configuration as the first power connector 53A.

The connector assembly 53 includes a first signal connector 53C and a second signal connector 53D. The first signal connector 53C extends in the opposite direction from the motor 40. The first signal connector 53C includes a signal terminal. A signal plug that is a mating component is mated with the first signal connector 53C. The signal plug is provided at a first end of a signal line. A second end of the signal line is connected to a vehicle control device. The control board 51 and the vehicle control device send and receive signals to and from each other via the signal terminal. The second signal connector 53D has the same configuration as the first signal connector 53C.

The cover 54 is made of synthetic resin. The cover 54 is a box-shaped member that is open toward the motor 40. An end wall of the cover 54 has a fitting hole 54A. The outer peripheral portion of the connector assembly 53 is fitted in the fitting hole 54A. Each connector (53A, 53B, 53C, 54C) of the connector assembly 53 passes through the fitting hole 54A and protrudes beyond the end wall of the cover 54 to the outside of the cover 53. The cover 54 is attached to the axial end of the motor 40. The cover 54 together with the connector assembly 53 covers the end of the motor 40.

### <Control Board 51>

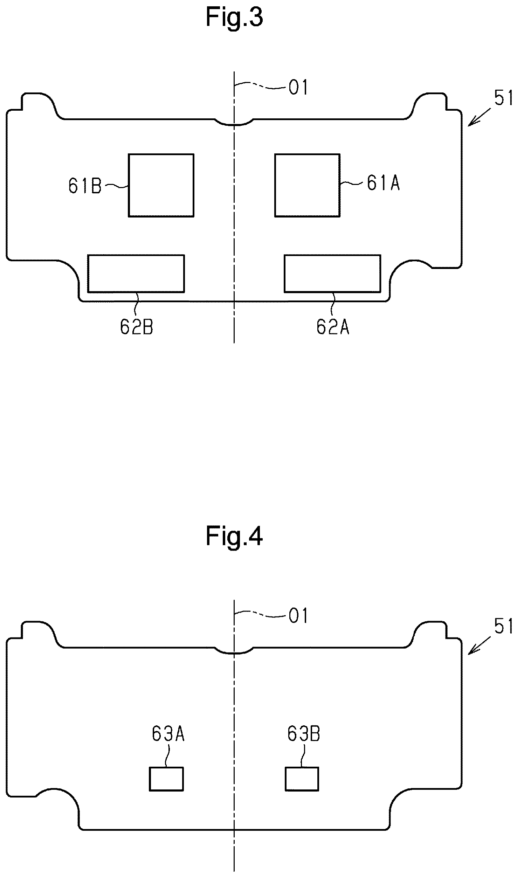

As shown in FIG. 3, the control board 51 has the shape of, for example, a rectangular flat plate. The control board 51 includes a first surface and a second surface that are located on opposite sides. The first surface is the surface of the control board 51 that is located on the opposite side from the power board 52 when the motor device 31 is assembled. The second surface is the surface of the control board 51 that faces the power board 52 when the motor device 31 is assembled.

The first surface of the control board 51 includes a first microcomputer 61A and a second microcomputer 61B. The first microcomputer 61A and the second microcomputer 61B are arranged symmetrically with respect to a first center line O1. The first center line O1 is, for example, a straight line passing through the center of the control board 51 when viewed from a direction perpendicular to the control board 51. The first surface includes a first inter-board connector 62A and a second inter-board connector 62B. The first inter-board connector 62A and the second inter-board connector 62B are arranged symmetrically with respect to the first center line O1.

As shown in FIG. 4, the second surface of the control board 51 includes a first ground connection member 63A and a second ground connection member 63B. The first ground connection member 63A and the second ground connection member 63B are arranged symmetrically with respect to the first center line O1. The first ground connection member 63A is disposed, for example, at or near a position corresponding to the first inter-board connector 62A. The second ground connection member 63B is disposed, for example, at or near a position corresponding to the second inter-board connector 62B. Each of the first ground connection member 63A and the second ground connection member 63B is an elastic member made of metal, and is elastic in a direction perpendicular to the control board 51. The metal is, for example, copper, and is electrically conductive.

### <Power Board 52>

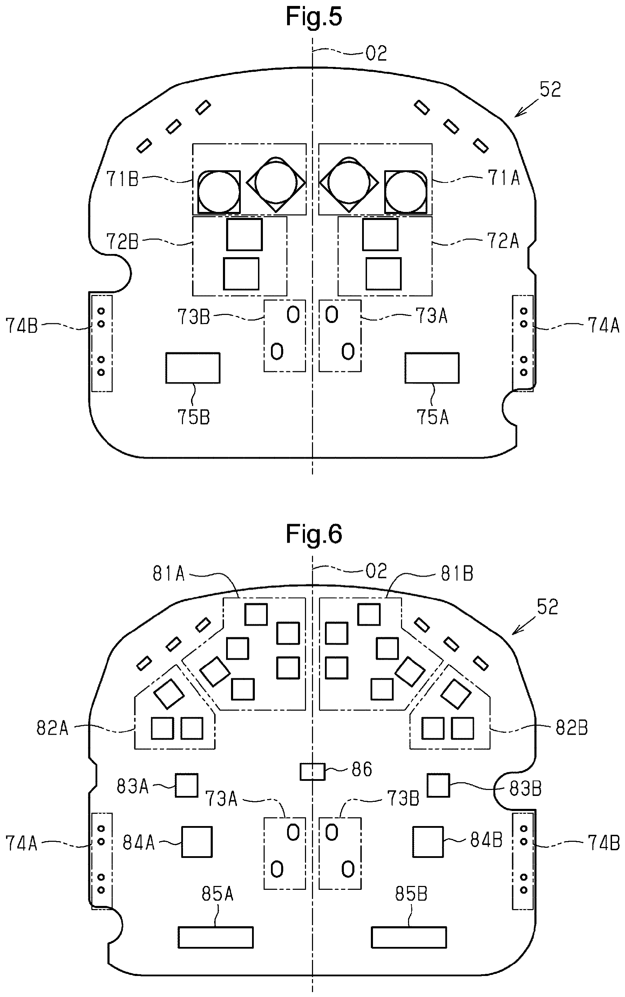

As shown in FIG. 5, the power board 52 has the shape of, for example, a flat plate. The power board 52 includes a first surface and a second surface that are located on opposite sides. The first surface is the surface of the power board 52 that is located on the opposite side from the control board 51 when the motor device 31 is assembled. The second surface is the surface of the power board 52 that faces the control board 51 when the motor device 31 is assembled.

The first surface of the power board 52 includes a first ripple capacitor 71A and a second ripple capacitor 71B. The first ripple capacitor 71A and the second ripple capacitor 71B are arranged symmetrically with respect to a second center line O2. The second center line O2 is, for example, a straight line passing through the center of the power board 52 when viewed from a direction perpendicular to the power board 52. The second center line O2 coincides with the first center line O1 of the control board 51 when viewed from a direction perpendicular to the power board 52.

The first surface of the power board 52 includes a first power filter 72A and a second power filter 72B. The first power filter 72A and the second power filter 72B are arranged symmetrically with respect to the second center line O2. The first power filter 72A and the second power filter 72B each include a capacitor and a coil.

The first surface of the power board 52 includes a first power terminal connection portion 73A and a second power terminal connection portion 73B. The first power terminal connection portion 73A and the second power terminal connection portion 73B are arranged symmetrically with respect to the second center line O2. The first power terminal connection portion 73A is a portion of the power board 52 to which the power terminal and the ground terminal of the first power connector 53A are connected. The second power terminal connection portion 73B is a portion of the power board 52 to which the power terminal and the ground terminal of the second power connector 53B are connected.

The first surface of the power board 52 includes a first signal terminal connection portion 74A and a second signal terminal connection portion 74B. The first signal terminal connection portion 74A and the second signal terminal connection portion 74B are arranged symmetrically with respect to the second center line O2. The first signal terminal connection portion 74A is a portion of the power board 52 to which the signal terminal of the first signal connector 53C is connected. The second power supply signal connection portion 74B is a portion of the power board 52 to which the signal terminal of the second signal connector 5D is connected.

The first surface of the power board 52 includes a first power circuit 75A and a second power circuit 75B. The first power circuit 75A and the second power circuit 75B are arranged symmetrically with respect to the second center line O2. Each of the first power circuit 75A and the second power circuit 75B is a chip-type integrated circuit. The first power circuit 75A converts the voltage of an in-vehicle direct current power supply to a voltage suitable for the operation of a first electric circuit including the first microcomputer 61A. The second power circuit 75B converts the voltage of the in-vehicle direct current power supply to, for example, a voltage suitable for the operation of a second electric circuit including the second microcomputer 61B.

As shown in FIG. 6, the second surface of the power board 52 includes a first inverter circuit 81A and a second inverter circuit 81B. The first inverter circuit 81A and the second inverter circuit 81B are arranged symmetrically with respect to the second center line O2. The first inverter circuit 81A and the second inverter circuit 81B each include a plurality of switching devices. The switching devices are FETs (Field Effect Transistors).

When each switching device of the first inverter circuit 81A performs a switching operation, the direct current power supplied from the direct current power supply is converted to three-phase alternating current power. The alternating current power generated by the first inverter circuit 81A is supplied to a first winding group of the motor 40 via a power supply path such as a busbar. When each switching device of the second inverter circuit 81B performs a switching operation, the direct current power supplied from the direct current power supply is converted to three-phase alternating current power. The alternating current power generated by the second inverter circuit 81B is supplied to a second winding group of the motor 40 via a power supply path such as a busbar.

The second surface of the power board 52 includes a first phase-open relay group 82A and a second phase-open relay group 82B. The first phase-open relay group 82A and the second phase-open relay group 82B are arranged symmetrically with respect to the second center line O2. The first phase-open relay group 82A opens and closes the power supply paths of the three phases between the first inverter circuit 81A and the first winding group of the motor 40. The second phase-open relay group 82b opens and closes the power supply paths of the three phases between the second inverter circuit 81B and the second winding group of the motor 40. The phase-open relays may be, for example, FETs.

The second surface of the power board 52 includes a first power relay 83A and a second power relay 83B. The first power relay 83A and the second power relay 83B are arranged symmetrically with respect to the second center line O2. The first power relay 83A opens and closes the power supply path between the in-vehicle direct current power supply and the first inverter circuit 81A. The second power relay 83B opens and closes the power supply path between the in-vehicle direct current power supply and the second inverter circuit 81B. The direct current power supply is, for example, a battery. The power relays may be, for example, FETs.

The second surface of the power board 52 includes a first pre-driver 84A and a second pre-driver 84B. The first pre-driver 84A and the second pre-driver 84B are arranged symmetrically with respect to the second center line O2. The first pre-driver 84A generates a drive signal for the first inverter circuit 81A based on a command from the first microcomputer 61A. The second pre-driver 84B generates a drive signal for the second inverter circuit 81B based on a command from the second microcomputer 61B.

The second surface of the power board 52 includes a third inter-board connector 85A and a fourth inter-board connector 85B. The third inter-board connector 85A and the fourth inter-board connector 85B are arranged symmetrically with respect to the second center line O2. The third inter-board connector 85A is disposed at a position corresponding to the first inter-board connector 62A when the motor device 31 is assembled. The fourth inter-board connector 85B is disposed at a position corresponding to the second inter-board connector 62B when the motor device 31 is assembled.

The second surface of the power board 52 includes a rotation angle sensor 86. The rotation angle sensor 86 is disposed near the center of the second surface. The rotation angle sensor 86 is located on the second center line O2. The rotation angle sensor 86 is a magnetic sensor. The magnetic sensor is, for example, an MR sensor (Magneto Resistive Sensor). The rotation angle sensor 86 detects the rotation angle of the motor 40.

The first microcomputer 61A generates a command for the first pre-driver 84A based on the rotation angle of the motor 40 detected through the rotation angle sensor 86. The second microcomputer 61B generates a command for the second pre-driver 84B based on the rotation angle of the motor 40 detected through the rotation angle sensor 86.

### <Assembled State of Motor Device 31>

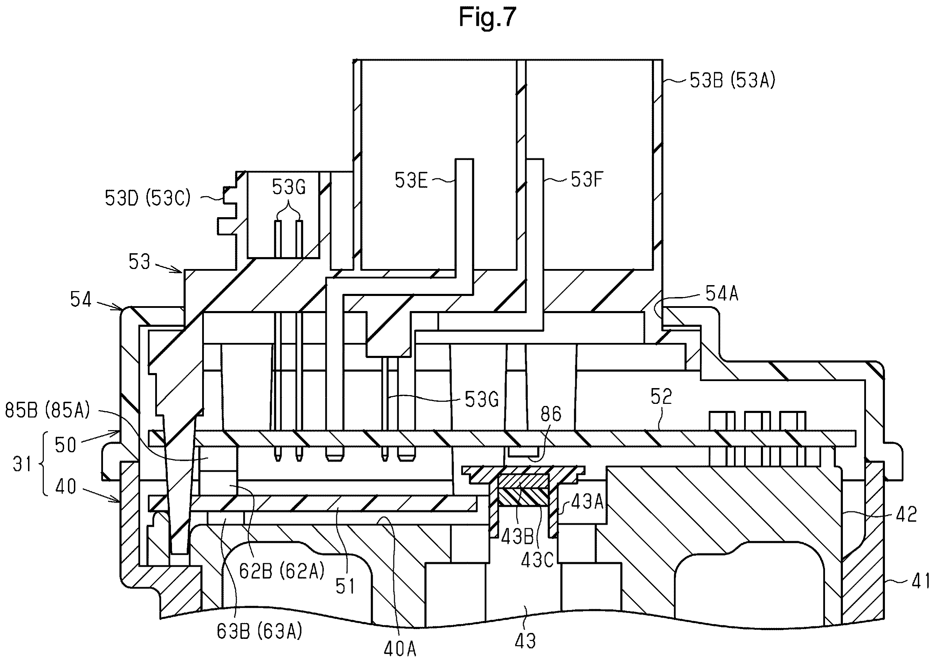

Next, the assembled state of the motor device 31 will be described. As shown in FIG. 7, the motor 40 includes a motor case 41 and a lid 42. An end of the motor case 41 is open in the axial direction. The end is the end of the motor case 41 on which the control device 50 is mounted. The lid 42 is fitted into the opening of the motor case 41 to close the opening. The lid 42 serves as an axial end wall of the motor case 41. The motor case 41 and the lid 42 are each made of metal. The metal is, for example, iron or an aluminum alloy.

The motor 40 includes an output shaft 43. The output shaft 43 is rotatably supported relative to the inner peripheral surface of the motor case 41. An end of the output shaft 43 passes through the lid 42 in the axial direction without contacting the lid 42. The end is the end of the output shaft 43 that is closer to the control device 50. A magnet 43B is fixed to the end of the output shaft 43 by a holder 43A. A spacer 43C is interposed between the end of the output shaft 43 and the magnet 43B. The holder 43A and the spacer 43C are each made of a non-magnetic material such as synthetic resin.

The control board 51 is housed inside the board housing portion 40A. The opposite end of the second ground connection member 63B from the control board 51 is in contact with the inner end wall of the board housing portion 40A. The second ground connection member 63B is maintained in a slightly compressed state in a direction perpendicular to the control board 51. Although not shown in the figure, the opposite end of the first ground connection member 63A from the control board 51 is also maintained in contact with the inner end wall of the board housing portion 40A. The first ground connection member 63A is maintained in a slightly compressed state in a direction perpendicular to the control board 51.

The power board 52 is supported by the lid 42 so as to cover the control board 51. The rotation angle sensor 86 faces the magnet 43B in the axial direction with the holder 43A interposed therebetween. The fourth inter-board connector 85B is connected to the second inter-board connector 62B. Although not shown in the figure, the third inter-board connector 85A is kept connected to the first inter-board connector 62A.

The second power connector 53B includes a power terminal 53E and a ground terminal 53F. The power terminal 53E and the ground terminal 53F each have a first end and a second end. The first ends are located inward of the peripheral wall of the second power connector 53B. The second ends pass through the power board 52 in a direction perpendicular to the power board 52. The second ends are connected to the power board 52 by soldering. Although not shown in the figure, the first power connector 53A also includes a power terminal 53E and a ground terminal 53F.

The second signal connector 53D includes a plurality of signal terminals 53G. Each signal terminal 53G has a first end and a second end. The first ends are located inward of the peripheral wall of the second signal connector 53D. The second ends pass through the power board 52 in a direction perpendicular to the power board 52. The second ends are connected to the power board 52 by soldering. Although not shown in the figure, the first signal connector 53C also includes a plurality of signal terminals 53G.

The power board 52 is connected to a positive terminal of the direct current power supply via the power terminal 53E. The power board 52 is connected to a negative terminal of the direct current power supply via the ground terminal 53F. Direct current power from the direct current power supply is supplied to the power board 52 via the power terminal 53E and the ground terminal 53F. Direct current power is supplied to the control board 51 via the first inter-board connector 62A and the third inter-board connector 85A and via the second inter-board connector 62B and the fourth inter-board connector 85B.

The power board 52 is connected to the vehicle control device via the signal terminals 53G. The power board 52 can send and receive signals to and from the vehicle control device via the signal terminals 53G. The control board 52 can send and receive signals to and from the vehicle control device via the first inter-board connector 62A and the third inter-board connector 85A and via the second inter-board connector 62B and the fourth inter-board connector 85B.

### <Effects of Embodiment>

The present embodiment has the following effects.
(1) The power terminal 53E and the ground terminal 53F are connected to the power board 52 alone. Therefore, the process of connecting the power terminal 53E and the ground terminal 53F to the control board 51 by soldering does not have to be performed. Therefore, the manufacturing cost of the motor device 31 can be reduced compared to a case where the power terminal 53E and the ground terminal 53F are connected to both the power board 52 and the control board 51 by soldering.
(2) The control board 51 can be connected to ground via the first inter-board connector 62A and the second inter-board connector 62B. The control board 51 is also in contact with the lid 42 of the motor 40 via the first ground connection member 63A and the second ground connection member 63B. That is, the control board 51 can be connected to so-called frame ground. This can reduce the level of noise generated in the control board 51.
(3) The first inter-board connector 62A and the second inter-board connector 62B can serve as entry points for noise that is transmitted from the power board 52 to the control board 51. Therefore, the first ground connection member 63A is disposed at or near the position corresponding to the first inter-board connector 62A on the second surface of the control board 51. The second ground connection member 63B is also disposed at or near the position corresponding to the second inter-board connector 62B on the second surface of the control board 51. This allows noise that is transmitted from the power board 52 to the control board 51 to be removed at the noise entry points of the control board 51.
(4) In the control board 51, at or near the position corresponding to the first inter-board connector 62A is a part of the control board 51 that vibrates little when the third inter-board connector 85A is connected to the first inter-board connector 62A. In the control board 51, at or near the position corresponding to the second inter-board connector 62A is a part of the control board 51 that vibrates little when the fourth inter-board connector 85B is connected to the second inter-board connector 62B. Therefore, the first ground connection member 63A and the second ground connection member 63B are maintained in appropriate contact with the inner end wall of the board housing portion 40A.

### <Other Embodiments>

The present embodiment may be modified as follows.
- The motor 40 may include a single winding group. The motor 40 may include a single control system and a single power supply system. In this case, the connector assembly 53 may have a configuration in which either the first power connector 53A and the first signal connector 53C or the second power connector 53B and the second signal connector 53D are omitted.

## Claims

1. A motor device comprising:
a motor;
a first circuit board provided at an axial end of the motor;
a second circuit board disposed at a position farther from the motor than the first circuit board in an axial direction of the motor, the second circuit board facing the first circuit board;
an inter-board connector that connects the first circuit board and the second circuit board; and
a plurality of terminals configured to supply electric power or a signal to the first circuit board and the second circuit board, wherein
the plurality of terminals is connected to the second circuit board alone.

2. The motor device according to claim 1, wherein:
the motor includes a motor case made of metal and an end wall on which the first circuit board is provided; and
a ground connection member is interposed between the first circuit board and the end wall.

3. The motor device according to claim 2, wherein the ground connection member is an electrically conductive elastic member and is elastic in a direction perpendicular to the first circuit board.

4. The motor device according to claim 2 or 3, wherein the ground connection member is disposed at or near a position corresponding to the inter-board connector when viewed from a direction perpendicular to the first circuit board.

5. The motor device according to any one of claims 1 to 3, wherein:
the first circuit board is a control board configured to control power supply to the motor; and
the second circuit board is a power board configured to supply electric power to the motor under control of the first circuit board.
